# EUROPEAN PATENT SPECIFICATION

(11) **EP 3 422 630 B1**
(45) Date of publication and mention of the grant of the patent: **17.02.2021**
(21) Application number: 17305799.3
(22) Date of filing: 27.06.2017
(51) Int. Cl.: H04L 9/32, H04L 29/06, H04W 12/06, H04W 12/08

(54) **ACCESS CONTROL TO A NETWORK DEVICE FROM A USER DEVICE**
KONTROLLE DES ZUGRIFFS AUF EINE NETZWERKVORRICHTUNG ÜBER EINE BENUTZERVORRICHTUNG
CONTRÔLE D'ACCÈS À UN DISPOSITIF DE RÉSEAU À PARTIR D'UN DISPOSITIF UTILISATEUR

(43) Date of publication of application: 02.01.2019
(73) Proprietor: Nokia Technologies Oy, 02610 Espoo (FI)
(72) Inventor: DUBUS, Samuel, 91620 Nozay (FR); PONTOIS, Cedric, 91620 Nozay (FR)
(74) Representative: Nokia EPO representatives

(56) References cited:
- WO-A1-2017/064107
- US-A1- 2008 034 216
- US-A1- 2009 187 759
- US-A1- 2014 331 060
- US-B1- 6 928 558

## Description

### FIELD OF INVENTION

The present subject matter generally relates to the access control on a network device, more particularly using a hardware token as a second medium for access control.

### BACKGROUND

Most of network pieces of equipment use passwords or user certificates to control the access of administrators and users locally or remotely. But, although pragmatic on a user perspective, passwords are usually considered weak and insecure solution. If the password is compromised (e.g. brute-forced, or sniffed) the network device (and, all the other devices on which the user is authorized to login) can be accessed without the control from the legitimate operator and/or owner. On another hand, user certificates (e.g. SSH certificates, X509) are more secured, but usually difficult to manage on a large scale infrastructure. Moreover, using certificates (both user and server side) enables protecting the mutual authentication of users and network devices, but does not carry authorization information that could be granted to different kind of administrators or users (e.g. administrators with only read permissions, or write permission of specific configuration etc.) which have to be managed locally at the network device level.

Most of the time, a centralized Authentication Server is used to ease the management of credentials and their modification in case of compromising. Moreover, the authentication usually relies on a second factor, instrumented with a software or hardware user-side security token. Those software or physical security tokens reinforce the security by using a OTP (i.e. One-Time Password) generated for each access request, or rely on server and user-side certificates sometime stored in a hardware security token (e.g. SmartCard).

In addition to general concerns about the issuing of certificates by Certificate Authorities, using server-side and user-side certificates often imposes a higher level of management than using simple password or even OTP. In case of a public Certificate Authority, the cost of issuing a certificate for each user can be high, while a private Certificate Authority will require a high administrative burden for an organization to manage user certificates distributions (especially if safely stored in tamper-resistant modules, e.g. SmartCards).

In case of an Authentication Server breach, the compromised server-side certificate need to be revoked on every terminal of users from which access are requested. And, a new server-side certificate need to be distributed everywhere. This is a management issue usually solved through using Certificate Revocation Lists (CRL). But, CRL distribution is a classical issue for certificates based systems for which no satisfactory solution exists to protect against "man in the middle".

Another issue of certificates is the difficulty to keep a reliable track of the identity of the real owner of a user-side certificate. Indeed, most certificate systems are vulnerable to attacks in which an attacker can claim the ownership on a certificate in place of the legitimate user. Moreover, if the Authentication Server is really breached, the association between a legitimate user and his certificate in the Authentication Server database can be tampered or lost. The process to recover from these kinds of attack, usually requires reissuing new certificates for all legitimate users managed by the Authentication Server, which could be a huge management burden (e.g. when a private Certificate Authority and SmartCards are used) or cost (e.g. when public Certificate Authority issued the user certificates).

The most widely used and pragmatic centralized authentication mechanisms then rely on challenge/response protocols which requires the computing of a OTP. Two kinds of principle exist for the computing of a OTP: (i) user-side generation; and, (ii) server-side generation.

User-side generation of OTP may rely on the computing of the same OTP value on both Authentication Server and user sides. One of the main concern when using user-side OTP generation technologies is that they suffer from possible "man in the middle" attacks: if the attacker manages to prevent the legitimate user to authenticate, he may use the OTP in place of the legitimate user during its validity period. US2009/0187759 A1 (Peter J. Marsico) discloses an authentication mechanism relying on user-side generation of OTP.

Server-side generation of OTP may rely on the generation of the OTP at the Authentication Server level. Then, the OTP is delivered to the client with a dedicated protocol or medium. For instance, SMS is often used as a second mean of communication to issue the OTP to the user (e.g. in the 3D-Secure protocol implementation). Unfortunately, now exist attacks enabling intercepting SMSs: (i) at radio level using a low cost device called an IMSI Catcher; or, (ii) by exploiting flaws in signaling protocols used in legacy telecom operators' infrastructure on which SMS delivery relies (i.e. SS7). This renders this kind of authentication mechanism vulnerable to "man in the middle" attacks.

Definitely, all the above solutions, when used alone with their ad-hoc authentication protocol (i.e. the one proposed by their vendors and, implemented in their authentication server software), only address authentication. The network device then need to manage locally the authorization of the client users.

Most likely, to distribute the authorization information managed in a central point, an authentication and authorization protocol is needed. The most well-known protocols which enable centralized authentication and authorization in the domain of IT and telecom are RADIUS and Diameter. Although widely used in these domains, they suffer some limitations and issues.

RADIUS and its subsequent extension, Diameter, are Framework protocols that do not define a specific authorization & authentication protocol per se. They make use of an underlying ad-hoc protocol for authentication which enables them relying on multi-factor authentication. They then share the same problems identified for ad-hoc authentication protocols associated to soft and physical user-side security tokens explained above.

RADIUS is an unconnected protocol (i.e. UDP, except using experimental RFCs) with some weak designed security when used alone, which renders it subject to packet manipulation and enabling a wide variety of attacks. Moreover, RADIUS does not carry the authorization information by default, which have to be managed by the server/network device locally.

Contrarily, Diameter is a connected protocol (i.e. relies on TCP/SCTP and upper Diameter managed sessions) making use of TLS for more security and, it supports the delivery of authorization information. But, the Diameter session only protects the exchanges between the server (i.e. Diameter client) to which the user connects and the Diameter nodes (i.e. AAA server or agent). The design and protection of the communication between users and the network resource (i.e. a server or network device) is beyond the scope of the Diameter protocol, and is up to the developers of the network resource's software.

However, neither RADIUS nor Diameter current authentication means (e.g. relying on EAP extensions) uses a second mean of communication to protect against "man in the middle" and other attacks (e.g. DoS).

Other protocols enable centralized management of both authentication and authorization with Single Sign-On (SSO) capabilities.

SSO Authentication and Authorization protocols often rely on mechanisms using a server side generated Access Token delivered to the client for a given period of time (e.g. 1 hour or one day). The Authentication and Authorization protocols usually use passwords as the basic authentication mean, and can be configured to rely on multi-factor to enhance the security of the authentication. They then fallback on the same authentication problems described above about challenge/response protocols with security tokens.

Moreover, another common issue of discussed SSO Authentication and Authorization protocols is the computing of the Access Token at the Authentication Server level for a given period of time, before delivering it to the client user that will provide it to the network device for authentication and authorization enforcement. This often makes another kind of "man in the middle" attack possible: when the legitimate user is disconnected, the token is still valid until its expiration time (it may be minutes or even hours), which enables an attacker who has stolen the Access Token to be granted with the legitimate user's rights.

Definitely, as the Access Token is granted for a period of time, it is less reactive when there is the need to withdraw the authorization of an administrator or user in case we detect a credential or Access Token theft.

Finally, there is a need for providing solution to protect against illegitimate access to a network device.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, a system for an access control, the system comprising:
means for receiving by a network device a request containing an identifier of a user device, a one-time password and an access request, from the user device,
means for transmitting by the network device another request to a control device, said another request containing the identifier of the user device and an identifier of the network device,
   means for transmitting by the control device said another request through an ultra narrow band radio connection to an authentication server that grants access rights attributed to the user device for the network device by checking the identifier of the user device and the identifier of the network device, and
   means for receiving by the control device an access token encrypted with the one-time password and containing granted access rights from the authentication server through an ultra narrow band radio connection,
means for receiving by the network device the access token from the control device (CD), means for decrypting by the network device the access token with the one-time password to apply the granted access rights attributed to the user device.

Advantageously, the solution resides first in the fact that the Access Token of a user trying to connect is not delivered to the user for further authentication and authorization for a period of time, but directly delivered to the network device for immediate authentication and authorization control and enforcement, using a second mean of communication. The solution also resides in the way the Access Token is secured for delivery to the network device and how it is controlled and verified for authenticity of the embedded information (i.e. Access Token) at the network device level in a temper-resistant module.

The solution provides the best of two worlds: easiness of password with the security of using user-side certificates for authentication (i.e. without the management complexity of managing user side certificates), and also addresses the authorization of users on a centralized server.

There can be a two medium authentication circuit for network devices. The first circuit relates to network and/or local connection and the second circuit uses ultra-narrow band wireless network (UNB) for IoT (e.g. Sigfox, LoRA, Weightless-N, or Narrow Band 4G and 5G derived protocols). Moreover, the invention relies on the implementation of a specific protocol with proper encryption and signatures of the messages exchanged and, on a binding of each user access session with the validation process at network device level to protect against interception over the ultra-narrow band wireless network and avoid replay attacks.

At several different levels, this solution offers protection against physical access:
- the control device as a server-side hardware security chip that can be built-in the network device (for instance by soldering it directly on the main processing board),
- the messages received by the control device through UNB are encrypted for the control device with its public key, avoiding any possible interception of secrets by illegitimate entities since the private key is only stored inside a system on chip (which could be built as a tamper resistant module),
- each message decrypted by the control device contains an Access Token. This Access Token is encrypted with the user one-time password. So if the communication line (i.e. data bus) between the control device and the network device is physically sniffed, the information secrecy is still preserved,
- the message containing the Access Token is also signed with the authentication server private key which public certificate can be used by the network device to verify no messages has been physically injected by an illegitimate entity on the communication line with the control device.

In an embodiment, after receiving said request from the user device, the network device generates a random number as an identifier for the current access request session between the user device and the network device, said identifier being included in said another request and the access token.

In an embodiment, the control device sends said another request to the control device via a dedicated communication line.

In an embodiment, the identifier of the user device and an identifier of the network device are encrypted with the public key of the authentication server.

In an embodiment, said another request is encrypted with the public key of the control device before being transmitted to the control device.

In an embodiment, said another request contains an identifier of a broadcasting server relaying messages between the authentication server and the control device through ultra-narrow band radio connection.

In an embodiment, the network device activates the control device by pulling up the dedicated communication line, by powering on the control device for a preconfigured period of time.

In an embodiment, the granted access rights attributed to the user device are applied if the access token is correctly decrypted by the one-time password and parameters in the decrypted access token are correct.

In another implementation, a method for an access control to a network device from a user device is described. The method comprises the following steps in a control device:
receiving a request from the network device, the request containing an identifier of the user device and an identifier of the network device, the request being encrypted with the public key of the control device,
decrypting the request with the private key of the control device,
transmitting said request through an ultra narrow band radio connection to an authentication server that grants access rights attributed to the user device for the network device by checking the identifier of the user device and the identifier of the network device,
receiving an access token containing granted access rights from the authentication server through an ultra narrow band radio connection, the access token being encrypted with the public key of the control device,
decrypting the access token with the private key of the control device,
transmitting the access token to the network device to apply the granted access rights attributed to the user device.

In an embodiment, the control device signs said another request with the private key of the control device.

In an embodiment, the access token is transmitted via a broadcasting server relaying messages between the authentication server and the control device through ultra-narrow band radio connection, the access token being transmitted in a request signed with the private key of the broadcasting server, a signature of said request being verified by the network device with the public key of the broadcasting server.

In another implementation, a network device for an access control to the network device from a user device, comprises:
a memory to store computer executable instructions; and
a processor to access the memory and execute the computer executable instructions to:
   receiving a request containing an identifier of the user device, a one-time password and an access request, from the user device,
   transmitting another request to a control device, said another request containing the identifier of the user device and an identifier of the network device, the control device being able to transmit said another request through an ultra narrow band radio connection to an authentication server that grants access rights attributed to the user device for the network device by checking the identifier of the user device and the identifier of the network device, and being able to receive an access token encrypted with the one-time password and containing granted access rights from the authentication server through an ultra narrow band radio connection,
   receiving the access token from the control device,
   decrypting the access token with the one-time password to apply the granted access rights attributed to the user device.

In another implementation, a control device for an access control to a network device from a user device, comprises:
a memory to store computer executable instructions; and
a processor to access the memory and execute the computer executable instructions to:
   receiving a request from the network device, the request containing an identifier of the user device and an identifier of the network device, the request being encrypted with the public key of the control device,
   decrypting the request with the private key of the control device,
   transmitting said another request through an ultra narrow band radio connection to an authentication server that grants access rights attributed to the user device for the network device by checking the identifier of the user device and the identifier of the network device,
   receiving an access token containing granted access rights from the authentication server through an ultra narrow band radio connection, the access token being encrypted with the public key of the control device,
   decrypting the access token with the private key of the control device,
   transmitting the access token to the network device to apply the granted access rights attributed to the user device.

In an embodiment, the memory and the processor of the control device are built in a system on chip.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 illustrates a schematic block diagram of a communication system according to one embodiment of the invention for a two medium access control on a network device.
FIG. 2 illustrates a flow chart illustrating a method for a two medium access control on a network device according to one embodiment of the invention.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

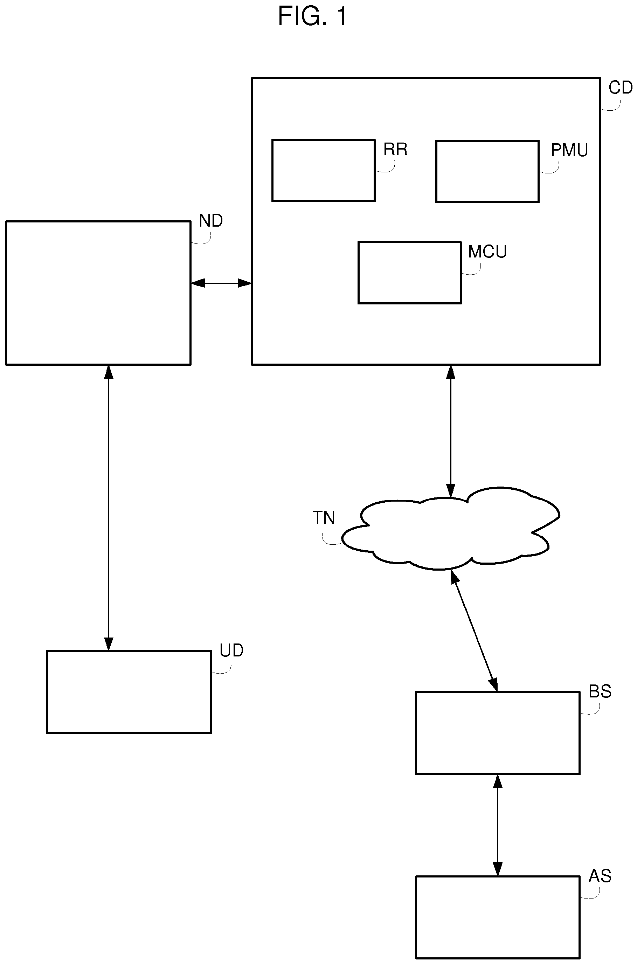

Referring to FIG. 1, a communication system comprises an authentication server AS, a broadcasting server BS, a user device UD, a network device ND and a control device CD, the control device communicating with the authentication server AS through a telecommunication network TN and the broadcasting server BS.

The authentication server AS is a centralized Authentication & Authorization server that manages the users' credentials and access rights

The authentication server AS stores public keys associated with identifiers of network devices and control devices. The authentication server encrypts a one time code with a public key associated with a control device.

The telecommunication network TN uses a ultra narrow band radio system, like "Sigfox", "LoRa", "Weightless-N", or a digital cellular radio communication network of 5G (Fifth Generation) type, having less than 25 kHz bandwidth and providing an excellent link budget due to low in-band receive noise (narrow receive filters remove most of the noise).

The telecommunication network TN uses a technology transmitting over very narrow spectrum channel to achieve ultra-long distance link for data link between transmitter and receiver. Use of narrow band results in low in-band receive noise (but also low data rate). In addition, by transmitting through UNB (i.e. Ultra-Narrow-Band), little power is required to transmit data. The long distance range combined to the low noise, allow deep reception in buildings and underground.

The broadcasting server BS is a server relaying messages between the authentication server AS and the control device CD through ultra-narrow band radio connection of the telecommunication network TN.

The user device UD is able to communicate with the network device ND. The user device UD can be a mobile terminal, a personal computer or other client device such as a smartphone, a tablet. The user device UD is equipped with an application or a browser able to connect to the network device ND with an access session and use a service provided by this latter.

The network device ND is a network element accessible from one or more user devices via a local network. For example, the network device ND is a hard drive to be connected to a local area network, or is a connected object such as an advertisement board, a television set, a household appliance, a communication terminal, a fridge, a camera, a connected car. In other examples, the network device ND is a core telecom network device like: router, switch, eNodeB, HLR/HSS, S-GW/P-GW of 4G and future 5G; or is any kind of IT server: authentication server, web server, etc...

The control device CD is a server-side hardware security chip associated with the network device ND, using UNB to receive an access token of a user requesting an access for a session. In one embodiment, the control device CD is embedded in the network device ND. The control device and the control device communicate between them via a dedicated communication line. The dedicated communication line could be a direct physical/wireline connection of the control device CD data and address buses to the central CPU of the network device ND, or could be a connection with a standard wireline serial or parallel protocol (e.g. USB, SATA, PATA etc.) through an I/O chip itself connected to central CPU.

The control device CD contains a radio receiver RR associated with an antenna, a microcontroller unit MCU, a power management unit PMU linked to a power line provided by the network device ND. The radio receiver RR, the microcontroller unit MCU and the power management unit PMU are built in a system on a chip, forming a tamper resistant module.

By default, the control device CD is powered off (i.e. it does not consume any power). When the network device needs to use it, it switches it on and the power management unit PMU provides power for a determined time, like a few minutes, to the radio receiver RR and to the microcontroller unit MCU, via an access request input line that enables the network device requesting the activation of the control device. The electronic device is built as a tamper resistant module in order to prevent a stored private key to be extracted or read.

Thanks to an antenna inserted in the control device CD, the radio signal is given to the UNB reception block, i.e. the radio receiver RR. Once the message is received from the radio signal, the information is analyzed by the microcontroller unit MCU. If this message seems valid, the microcontroller unit MCU tries to decrypt it (decipher) by using the private cryptographic key stored in a non-volatile memory (e.g. this cryptographic key is burned in a tiny ROM of the same system on a chip) from which it cannot be extracted without breaking it (i.e. the control device CD acts as an embedded server-side security token chip which is tamper resistant, much like a SmartCard). If the microcontroller unit MCU successfully deciphers the received message, the message content is provided through the communication line to the network device. Thanks to this information, the software of the network device is able to grant access to the user, using the one time password provided by the user through his access session to decipher and verify if included information are correct.

The control device and the authentication server share a secret (i.e. a seed) enabling generating the same one time password on both sides, which is stored in the authentication server database as follows: a user device identifier, associated with a password (protected using proper encryption), and associated with its access rights for each network device the user is authorized to access (e.g. using the network device identifier and access rights using a format like XACML or XOrBAC).

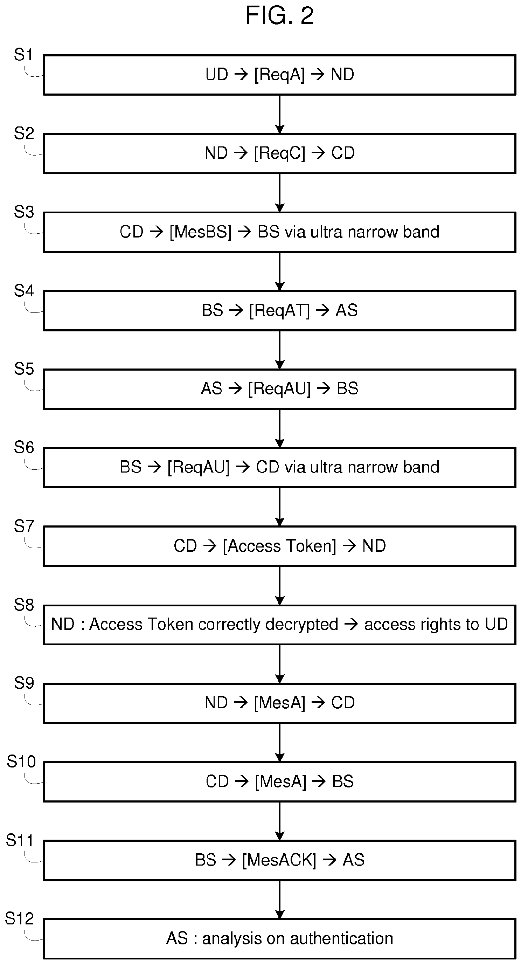

With reference to FIG. 2, a method for an access control to a network device (ND) from a user device according to one embodiment of the invention comprises steps S1 to S12 executed within the communication system.

In step S1, the user device UD is attempting to login on the network device ND, and uses a client software to open an access session with the network device ND across an open network. This access session should at least be a one-way authenticated security session (e.g. server-side authenticated HTTPS session, or SSH session until the user authentication request from the server etc.). But, it could also be a complete two-way authenticated security session using a first factor for authentication on the client side (e.g. a password authentication for a user to set a fully two sides, user and server, authenticated SSH session). The user device UD then sends through this access session an access request ReqA to the network device. To construct the access request ReqA, the user device generates a one-time password OTP using a COTS (Component Off The Shelf) user-side security token.

The access request ReqA comprises at least the following pieces of information:
- user device identifier IdU,
- generated one-time password OTP,
- date of request,
- an authorization request.

The authorization request can contain a list of accesses (i.e. authorizations) to services, features, attributes etc... that could also be expressed as a policy with an Access Control policy language like XACML or XOrBAC. Otherwise the authorization request could simply be an implicit access demand to login as the user identified in the request.

On its side, the network device ND activates the control device CD (acting as its server-side hardware security chip) by pulling up its access request input line. This powers on the chip up for a preconfigured period of time (e.g. 10 seconds, 1 minute) after the network device has pulled down the access request input line. From its activation time onward, the server-side hardware security chip waits for data on its communication line.

A standard bi-directional communication protocol may be used to exchange data with the control device (e.g. USB).

In step S2, after receiving the access request ReqA from the user device UD, containing especially the user device identifier IdU and the one-time password OTP, the network device ND generates a random number (i.e. a nonce) as an identifier IdS for the current access session. This identifier IdS could be considered as a temporary user device identifier on the network device within the current access session. This random number is used to identify the open user's connection to which an access token will relate. So that, if the connection is closed, the network device ND can discard the corresponding access token. It is useful to differentiate from current unconnected solutions, based on web technologies, which usually enables man-in-the-middle attack by impersonating a user and use a still valid access token of an unconnected user.

Then the network device builds an access token request ReqAT for user (i.e. on behalf of user device UD) to be sent to the authentication server AS. This request ReqAT comprises the following pieces of information that can optionally be globally encrypted for authentication server AS using its public key:
- the network device identifier IdND,
- user device identifier IdU
- the corresponding temporary identifier IdS for the current access request session.

Then the network device transmits a control request ReqC containing the access token request ReqAT to the control device CD (its server-side hardware security chip) on its communication line, and containing additional delivery information relating to the broadcasting server BS towards which the request should be sent for further delivery to the correct authentication server AS. This request ReqC comprises the following pieces of information:
- optionally, the identifier IdBS of the broadcasting server BS,
- the identifier IdND of the network device, optionally it may be encrypted for the broadcasting server BS using its public key,
- the access token request ReqAT,
- optionally, an identifier of the authentication server AS to which the access token request ReqAT should be delivered, this identifier may itself be optionally encrypted for the broadcasting server BS using the public key of the broadcasting server.

The global message is encrypted with the public key of the control device associated with the network device before being transmitted to it.

The identifier of the broadcasting server is an optional parameter of the message, which may be omitted depending on the underlying technology used for UNB communication: if it requires an identifier of the destination device, like in the case of LTE-M/Narrow Band IoT; or, if the UNB technology relies on pure broadcasting of messages.

The encryption of the identifier IdND of the network device is optionally used to protect against possible disclosure of which network device makes a request, in case an adversary is listening on the UNB medium.

In case the access token request ReqAT is not encrypted and the control request ReqC does not contain identifier IdBS of the broadcasting server BS, the access token request ReqAT and the control request ReqC can be considered as the same request.

Once the request is transmitted, the network device ND now waits for a reply to its access token request on the communication line from the control device.

In step S3, once the control device CD has received the control request ReqC transmitted by the network device, it decrypts the control request ReqC with its internal private key (if encrypted) and identifies the broadcasting server BS if the identifier IdBS is contained in the control request ReqC. The control device CD may optionally sign the access token request ReqAT with the private key of the control device for possible additional control at authentication server AS level. The control device CD also signs the whole control request ReqC with the private key of the control device. The processing of the received control request ReqC by the control device yields to a modified control request ReqC.

The control device CD transmits the modified control request ReqC through UNB radio connection for delivery to the broadcasting server BS.

In step S4, once the modified control request ReqC sent by the control device through UNB is received by the broadcasting server BS, it verifies the message is addressed to it and retrieves the identifier IdND of the network device, by decrypting it with its private key if it was encrypted in previous steps. It then retrieves from its database the public key of the control device CD associated with the identifier IdND of the network device ND. If the modified control request ReqC does not contain the identifier of the authentication server AS, the broadcasting server retrieves from its database the authentication server AS associated with the network device, authentication server AS to which the access token request ReqAT has to be sent.

Definitely, the broadcasting server BS verifies the various signatures of the modified control request ReqC and the embedded access token request ReqAT are correct to validate the legitimacy to relay the access token request ReqAT to the authentication server AS associated to the identifier IdND. The broadcasting server BS uses a two-way authenticated security session (e.g. IPSEC or TLS using mutual-authentication) for delivery of the access token request ReqAT (optionally signed with the control device private key) to the identified authentication server AS.

In step S5, when the authentication server AS receives the access token request ReqAT, it firstly decrypts the Access Token request ReqAT with its private key. If the access token request ReqAT was previously signed, the authentication server AS retrieves from its database the public key of the control device CD associated with the identifier IdND of the network device ND, and it verifies if the signature of the access token request ReqAT is valid. According to the elements provided in the request (user device identifier, network device identifier, etc.), according to the validity of the signature of the access token request ReqAT (if signed), and according to its local configuration and access rights database, it accepts or declines the request. The authentication server AS also retrieves from its database the user long-term password to compute the same one-time password OTP the user device has computed on his side using the shared secret with the user device.

If the access request is accepted, the authentication server AS generates an access token for the requesting user device, the Access Token comprising:
- the identifier IdND of the network device for which the access is granted;
- optionally the identifier IdU of granted user device;
- granted access rights ACU for user device (e.g. using a format like XACML or XOrBAC);
- the temporary identifier IdS for the current access request session;
- optionally a timestamp;
- optionally an access duration for the access token.

This access token is encrypted using the computed one-time password OTP using a safe symmetric encryption algorithm (e.g. CBC-AES-256 with good randomness of IV generated) and is signed with the private key of the authentication server AS.

The access duration of the access token is a maximum duration, as the access token should expire as soon as the user device closes the access session initiated at step S1.

Once computed, the authentication server AS sends an authentication request ReqAU for the delivery of the access token through UNB to a broadcasting server BS, which could be an internal server or an outsourced provider (it could be the same broadcasting server BS used at step S4 or another one). The authentication request ReqAU comprises:
- the identifier IdND of the network device to which the Access Token must be delivered;
- optionally the temporary identifier IdS for the current access request session;
- the encrypted and signed access token.

To transmit the authentication request ReqAU, the authentication server AS should use a two-way authenticated security session with the broadcasting server BS (e.g. a IPSEC or TLS tunnel using mutual-authentication).

In step S6, once the broadcasting server BS receives the authentication request ReqAU, it retrieves from its database the public key associated with the control device by means of the identifier IdND of the network device. The broadcasting server may optionally remove from the authentication request ReqAU the identifier IdND. The processing of the received control request ReqAU by the broadcasting server yields to a modified authentication request ReqAU.

The network device identifier is an optional parameter of the message, which may be omitted depending on the underlying technology used for UNB communication: if it requires an identifier of the destination device, like in the case of LTE-M/Narrow Band IoT; or, if the UNB technology rely on pure broadcasting of messages.

Then, the modified authentication request ReqAU is encrypted using the control device public key. In an optional step, the modified authentication request ReqAU could be first signed using the private key of the broadcasting server BS.

Then, the encrypted and signed modified authentication request ReqAU is sent from the broadcasting server BS on the UNB radio network to the network device ND.

In step S7, when the control device CD receives the modified authentication request ReqAU, it deciphers the encrypted access token contained in it with its private key and transmits the access token to the network device ND which is waiting on its communication line for a reply to its access token request.

In step S8, the network device ND optionally verifies the access token has been transmitted by the legitimate broadcasting server BS via the signed modified authentication request ReqAU using the corresponding public key, thus a signature of said signed modified authentication request is verified by the network device with the public key of the broadcasting server. It also verifies the signed access token has been issued by the legitimate authentication server AS, using the corresponding public key. Then, it verifies the access token can be decrypted with the one-time password OTP received previously from the user device UD.

The temporary identifier IdS for the current access request session included in the message enables identifying the corresponding access session to which the access token should correspond, and definitely the user device and the one-time password OTP presented in the access session, with which the access token should be decrypted to verify if the authentication should succeed or fail. This temporary identifier IdS is also used as a mean to avoid replay attack when associated with the encrypted version in the access token.

If the access token is correctly decrypted by the one-time password OTP, the access session used by the user device to transmit this access request at step S1 is still open, and the parameters in the decrypted access token are correct (i.e. the identifier IdU, network device identifier IdND, temporary identifier IdS), it means the authentication of user device succeeds. The network device can then apply to user device the access rights provided inside the access token.

On the contrary, if one of the above mentioned criteria is not verified (i.e. access token is not correctly decrypted by the one-time password, parameters in the decrypted access token are not correct, or one of the verified signature is not valid), the authentication of user device for the identified access session fails, no authorization is granted and the network device closes the access session of the user device.

In step S9, once the access token is verified, the network device may send back to the authentication server AS, an acknowledgement message that is sent through UNB, using the control device CD. This acknowledgement message is optional and only serves the possible synchronization needs between the authentication server and the client-side OTP generation means.

The network device produces a core acknowledgement message MesACK that contains the following pieces of information that are globally encrypted using the public key of the authentication server AS:
- optionally, the network device identifier IdND,
- optionally, the corresponding temporary identifier IdS for the current access request session,
- user device identifier IdU,
- A code indicating the authentication decision: Success/Failure.

Then, the following pieces of information are added to the core acknowledgement message MesACK to constitute an acknowledgement message MesA:
- optionally the identifier IdBS of the broadcasting server BS,
- the identifier IdND of the network device, optionally encrypted for the broadcasting server BS using its public key,
- optionally, an identifier of the authentication server AS to which the core acknowledgement message MesACK should be delivered, this identifier may itself be optionally encrypted for the broadcasting server BS using its public key.

The acknowledgement message MesA is encrypted with the public key of the control device. Then the network device ND sends the acknowledgement message MesA to the control device.

In step S10, once the control device has received the acknowledgement message MesA, it decrypts it with its internal private key and, adds the network device identifier IdND, optionally encrypted for the broadcasting server BS using its public key. The control device may optionally remove from the acknowledgement MesA the identifier IdBS, if it is present in the message. Optionally, the control device may also sign the core acknowledgement message MesACK contained in the received message MesA, with the control device private key. The processing of the received acknowledgement message MesA by the control device yields to a modified acknowledgement message MesA.

The modified acknowledgement message MesA is then transmitted through UNB for delivery to the broadcasting server BS.

In step S11, once the modified acknowledgement message MesA is received by the broadcasting server BS, this latter verifies the message is addressed to it and decrypts the identifier IdND of the network device with its private key, if it was previously encrypted. It also extracts the core acknowledgment message MesACK contained in the received modified acknowledgement message MesA, which may be optionally signed with the private key of the control device. It then retrieves from its database the public key of the control device CD associated to the network device ND. If the modified acknowledgement message MesA does not contain the identifier of the authentication server AS, the broadcasting server retrieves from its database the authentication server AS associated with the network device. The optional signature of the core acknowledgment message MesACK may be used by the broadcasting server to control and decide whether it has to effectively relay it to the authentication server AS.

Definitely, if the broadcasting server BS has decided to relay the core acknowledgment message MesACK, it uses a two-way authenticated security session (e.g. IPSEC or TLS using mutual-authentication) for delivery of the core acknowledgement message MesACK, optionally signed with the private key of the control device, to the identified authentication server AS.

In step S12, when the authentication server AS receives the core acknowledgement message MesACK, and its optional signature, it firstly verifies the signature if present. Then, it decrypts the core acknowledgement message MesACK with its private key. According to the elements provided in the decrypted core acknowledgement message MesACK (user device identifier, network device identifier, etc.), it can use the embedded code indicating the authentication Success or Failure on the network device to perform some server-side analysis and treatment (e.g. user-side security tokens synchronization, statistics computation, attacks detection, alerts logging etc...).

The ultra narrow band radio connection between the control device and the broadcasting server BS can be based or not on a broadcast technology, the messages exchanged via this connection being encrypted and only the recipient having the right key to decrypt the messages can read the content of the messages.

In one embodiment in case of broadcast technology, the control device CD can send periodically messages to the broadcasting server BS, the messages being uplink message containing an identifier of the control device, in order to localize the control device in a cell of the broadcasting server BS and thus limit the broadcast of the messages from the broadcasting server BS.

An embodiment comprises a server comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. A system for an access control, the system comprising:
means for receiving (S1) by a network device (ND) a request (ReqA) containing an identifier (IdU) of a user device (UD), a one-time password (OTP) and an access request, from the user device (UD),
means for transmitting (S2) by the network device (ND) another request (ReqC) to a control device (CD), said another request (ReqC) containing the identifier (IdU) of the user device (UD) and an identifier (IdND) of the network device (ND),
means for transmitting by the control device (CD) said another request (ReqC) through an ultra narrow band radio connection to an authentication server (AS) that grants access rights attributed to the user device (UD) for the network device (ND) by checking the identifier (IdU) of the user device (UD) and the identifier (IdND) of the network device (ND), and
means for receiving by the control device (CD) an access token encrypted with the one-time password (OTP) and containing granted access rights from the authentication server (AS) through an ultra narrow band radio connection,
means for receiving (S7) by the network device (ND) the access token from the control device (CD),
means for decrypting (S8) by the network device (ND) the access token with the one-time password (OTP) to apply the granted access rights attributed to the user device (UD).

2. The system as claimed in claim 1, wherein after receiving said request (ReqA) from the user device, the network device generates a random number as an identifier (IdS) for the current access request session between the user device (UD) and the network device (ND), said identifier (IdS) being included in said another request (ReqC) and the access token.

3. The system as claimed in claim 1 or 2, wherein the network device (ND) sends said another request to the control device (CD) via a dedicated communication line.

4. The system as claimed in any of the preceding claims, wherein the identifier (IdU) of the user device and an identifier (IdND) of the network device (ND) are encrypted with a public key of the authentication server (AS).

5. The system as claimed in any of the preceding claims, wherein said another request (ReqC) is encrypted with a public key of the control device (CD) before being transmitted to the control device (CD).

6. The system as claimed in any of the preceding claims, wherein said another request (ReqC) contains an identifier (IdBS) of a broadcasting server (BS) relaying messages between the authentication server (AS) and the control device (CD) through ultra-narrow band radio connection.

7. The system as claimed in any of claims 3 to 6, wherein the network device (ND) activates the control device (CD) by pulling up the dedicated communication line, by powering on the control device (CD) for a preconfigured period of time.

8. The system as claimed in any of the preceding claims, wherein the granted access rights attributed to the user device (UD) are applied if the access token is correctly decrypted by the one-time password and parameters in a decrypted access token are correct.

9. The system as claimed in claim 1, wherein the control device (CD) signs said another request (ReqC) with a private key of the control device (CD).

10. The system as claimed in claim 1 or 9, wherein the access token is transmitted via a broadcasting server (BS) relaying messages between the authentication server (AS) and the control device (CD) through ultra-narrow band radio connection, the access token being transmitted in a request signed with a private key of the broadcasting server (BS), a signature of said request being verified by the network device (ND) with a public key of the broadcasting server (BS).

11. The system as claimed any preceding claims, wherein a memory and a processor of the control device are built in a system on chip.

12. The system as claimed in claim 1, wherein the control request (ReqC) contains an access token request (ReqAT) to the control device (CD).

13. The system as claimed in claim 12, wherein the access token request (ReqAT) and the control request (ReqC) is considered as the same request.

14. The system as claimed in claim 12 or 13, wherein the system further comprising
means for receiving by the authentication server (AS) the access token request (ReqAT),
means for decrypting the Access Token request (ReqAT) with its private key, or
if the access token request (ReqAT) was previously signed,
means for retrieving by the authentication server (AS) the public key of the control device (CD) associated with the identifier (IdND) of the network device (ND), and
means for accepting or declining the request.

15. The system as claimed in preceding claim 8, wherein the parameters comprise the identifier (IdU) of the user device (UD), the network device identifier (IdND), and the temporary identifier (IdS).

## Patentansprüche

1. System für eine Zugangssteuerung, wobei das System Folgendes umfasst:
Mittel zum Empfangen (S1) einer Anforderung (ReqA), die eine Kennung (IdU) einer Benutzervorrichtung (UD), ein einmaliges Passwort (OTP) und eine Zugangsanforderung umfasst, durch eine Netzwerkvorrichtung (ND) von der Benutzervorrichtung (UD),
Mittel zum Übertragen (S2) einer anderen Anforderung (ReqC) durch die Netzwerkvorrichtung (ND) zu einer Steuervorrichtung (CD), wobei die andere Anforderung (ReqC) die Kennung (IdU) der Benutzervorrichtung (UD) und eine Kennung (IdND) der Netzwerkvorrichtung (ND) enthält,
Mittel zum Übertragen der anderen Anforderung (ReqC) durch die Steuervorrichtung (CD) über eine Ultraschmalbandfunkverbindung zu einem Authentifizierungsserver (AS), der durch Prüfen der Kennung (IdU) der Benutzervorrichtung (UD) und der Kennung (IdND) der Netzwerkvorrichtung (ND) Zugangsrechte gewährt, die der Benutzervorrichtung (UD) für die Netzwerkvorrichtung (ND) zugeteilt sind, und
Mittel zum Empfangen eines Zugangstokens, das mit dem einmaligen Passwort (OTP) verschlüsselt ist und gewährte Zugangsrechte vom Authentifizierungsserver (AS) enthält, durch die Steuervorrichtung (CD) über eine Ultraschmalbandfunkverbindung,
Mittel zum Empfangen (S7) des Zugangstokens durch die Netzwerkvorrichtung (ND) von der Steuervorrichtung (CD),
Mittel zum Verschlüsseln (S8) des Zugangstokens mit dem einmaligen Passwort (OTP) durch die Netzwerkvorrichtung (ND), um gewährte Zugangsrechte, die der Benutzervorrichtung (UD) zugeteilt sind, anzuwenden.

2. System nach Anspruch 1, wobei nach Empfangen der Anforderung (ReqA) von der Benutzervorrichtung die Netzwerkvorrichtung eine zufällige Zahl als eine Kennung (IdS) für die aktuelle Zugangsanforderungssitzung zwischen der Benutzervorrichtung (UD) und der Netzwerkeinrichtung (ND) erzeugt, wobei die Kennung (IdS) in der anderen Anforderung (ReqC) und im Zugangstoken beinhaltet ist.

3. System nach Anspruch 1 oder 2, wobei die Netzwerkvorrichtung (ND) via eine dedizierte Kommunikationsleitung eine andere Anforderung an die Steuervorrichtung (CD) sendet.

4. System nach einem der vorhergehenden Ansprüche, wobei die Kennung (IdU) der Benutzervorrichtung und eine Kennung (IdND) der Netzwerkvorrichtung (ND) mit einem öffentlichen Schlüssel des Authentifizierungsservers (AS) verschlüsselt werden.

5. System nach einem der vorhergehenden Ansprüche, wobei die andere Anforderung (ReqC) mit einem öffentlichen Schlüssel der Steuervorrichtung (CD), verschlüsselt wird, bevor sie zur Steuervorrichtung (CD) übertragen wird.

6. System nach einem der vorhergehenden Ansprüche, wobei die andere Anforderung (ReqC) eine Kennung (IdBS) eines Broadcastingservers (BS) enthält, der Nachrichten zwischen dem Authentifizierungsserver (AS) und der Steuervorrichtung (CD) über eine Ultraschmalbandfunkverbindung weiterleitet.

7. System nach einem der Ansprüche 3 bis 6, wobei die Netzwerkvorrichtung (ND) die Steuervorrichtung (CD) durch Hochziehen der dedizierten Kommunikationsleitung, durch Einschalten der Steuervorrichtung (CD) für eine vorausgelegte Zeitperiode aktiviert.

8. System nach einem der vorhergehenden Ansprüche, wobei die gewährten Zugangsrechte, die der Benutzervorrichtung (UD) zugeteilt sind, angewendet werden, wenn das Zugangstoken durch das einmalige Passwort korrekt entschlüsselt wird und Parameter in einem verschlüsselten Zugangstoken korrekt sind.

9. System nach Anspruch 1, wobei die Steuervorrichtung (CD) eine andere Anforderung (ReqC) mit einem privaten Schlüssel der Steuervorrichtung (CD) signiert.

10. System nach Anspruch 1 oder 9, wobei das Zugangstoken via einen Broadcastingserver (BS), der Nachrichten zwischen dem Authentifizierungsserver (AS) und der Steuervorrichtung (CD) über eine Ultraschmalbandfunkverbindung weiterleitet, übertragen wird, wobei das Zugangstoken in einer Anforderung übertragen wird, die mit einem privaten Schlüssel des Broadcastingservers (BS) signiert ist, wobei eine Signatur der Anforderung mit einem öffentlichen Schlüssel des Broadcastingservers (BS) von der Netzwerkvorrichtung (ND) verifiziert wird.

11. System nach einem der vorhergehenden Ansprüche, wobei sich ein Speicher und ein Prozessor der Steuervorrichtung in einem System auf Chip befinden.

12. System nach Anspruch 1, wobei die Steueranforderung (ReqC) eine Zugangstokenanforderung (ReqAT) für die Steuervorrichtung (CD) enthält.

13. System nach Anspruch 12, wobei die Zugangstokenanforderung (ReqAT) und die Steueranforderung (ReqC) als dieselbe Anforderung betrachtet werden.

14. System nach Anspruch 12 oder 13, wobei das System ferner Folgendes umfasst
Mittel zum Empfangen der Zugangstokenanforderung (ReqAT) durch den Authentifizierungsserver (AS),
Mittel zum Entschlüsseln der Zugangstokenanforderung (ReqAT) mit ihrem privaten Schlüssel, oder
wenn die Zugangstokenanforderung (ReqAT) zuvor signiert wurde,
Mittel zum Abrufen des öffentlichen Schlüssels der Steuervorrichtung (CD), der mit der Kennung (IdND) der Netzwerkvorrichtung (ND) verknüpft ist, durch den Authentifizierungsserver (AS), und
Mittel zum Akzeptieren oder Zurückweisen der Anforderung.

15. System nach dem vorhergehenden Anspruch 8, wobei die Parameter die Kennung (IdU) der Benutzervorrichtung (UD), die Netzwerksvorrichtungskennung (IdND) und die temporäre Kennung (IdS) umfassen.

## Revendications

1. Système pour un contrôle d'accès, le système comprenant :
un moyen pour recevoir (S1) par un dispositif réseau (ND) une demande (ReqA) contenant un identifiant (IdU) d'un dispositif utilisateur (UD), un mot de passe à usage unique (OTP) et une demande d'accès, en provenance du dispositif utilisateur (UD),
un moyen pour transmettre (S2) par le dispositif réseau (ND) une autre demande (ReqC) à un dispositif de contrôle (CD), ladite une autre demande (ReqC) contenant l'identifiant (IdU) du dispositif utilisateur (UD) et un identifiant (IdND) du dispositif réseau (ND),
un moyen pour transmettre par le dispositif de contrôle (CD) ladite une autre demande (ReqC) par l'intermédiaire d'une connexion radio à bande ultra étroite à un serveur d'authentification (AS) qui octroie des droits d'accès attribués au dispositif utilisateur (UD) pour le dispositif réseau (ND) en vérifiant l'identifiant (IdU) du dispositif utilisateur (UD) et l'identifiant (IdND) du dispositif réseau (ND), et
un moyen pour recevoir par le dispositif de contrôle (CD) un jeton d'accès chiffré avec le mot de passe à usage unique (OTP) et contenant des droits d'accès octroyés en provenance du serveur d'authentification (AS) par l'intermédiaire d'une connexion radio à bande ultra étroite,
un moyen pour recevoir (S7) par le dispositif réseau (ND) le jeton d'accès en provenance du dispositif de contrôle (CD),
un moyen pour déchiffrer (S8) par le dispositif réseau (ND) le jeton d'accès avec le mot de passe à usage unique (OTP) pour appliquer les droits d'accès octroyés attribués au dispositif utilisateur (UD).

2. Système selon la revendication 1, dans lequel après la réception de ladite demande (ReqA) en provenance du dispositif utilisateur, le dispositif réseau génère un nombre aléatoire en tant qu'identifiant (IdS) pour la session de demande d'accès en cours entre le dispositif utilisateur (UD) et le dispositif réseau (ND), ledit identifiant (IdS) étant inclus dans ladite une autre demande (ReqC) et le jeton d'accès.

3. Système selon la revendication 1 ou 2, dans lequel le dispositif réseau (ND) envoie ladite une autre demande au dispositif de contrôle (CD) via une ligne de communication dédiée.

4. Système selon l'une quelconque des revendications précédentes, dans lequel l'identifiant (IdU) du dispositif utilisateur et un identifiant (IdND) du dispositif réseau (ND) sont chiffrés avec une clé publique du serveur d'authentification (AS).

5. Système selon l'une quelconque des revendications précédentes, dans lequel ladite une autre demande (ReqC) est chiffrée avec une clé publique du dispositif de contrôle (CD) avant d'être transmise au dispositif de contrôle (CD).

6. Système selon l'une quelconque des revendications précédentes, dans lequel ladite une autre demande (ReqC) contient un identifiant (IdBS) d'un serveur de diffusion (BS) relayant des messages entre le serveur d'authentification (AS) et le dispositif de contrôle (CD) par l'intermédiaire d'une connexion radio à bande ultra-étroite.

7. Système selon l'une quelconque des revendications 3 à 6, dans lequel le dispositif réseau (ND) active le dispositif de contrôle (CD) en tirant vers le haut la ligne de communication dédiée, en mettant sous tension le dispositif de contrôle (CD) pendant une période de temps préconfigurée.

8. Système selon l'une quelconque des revendications précédentes, dans lequel les droits d'accès octroyés attribués au dispositif utilisateur (UD) sont appliqués si le jeton d'accès est déchiffré correctement par le mot de passe à usage unique et que des paramètres dans un jeton d'accès déchiffré sont corrects.

9. Système selon la revendication 1, dans lequel le dispositif de contrôle (CD) signe ladite une autre demande (ReqC) avec une clé privée du dispositif de contrôle (CD).

10. Système selon la revendication 1 ou 9, dans lequel le jeton d'accès est transmis via un serveur de diffusion (BS) relayant des messages entre le serveur d'authentification (AS) et le dispositif de contrôle (CD) par l'intermédiaire d'une connexion radio à bande ultra-étroite, le jeton d'accès étant transmis dans une demande signée avec une clé privée du serveur de diffusion (BS), une signature de ladite demande étant vérifiée par le dispositif réseau (ND) avec une clé publique du serveur de diffusion (BS).

11. Système selon l'une quelconque des revendications précédentes, dans lequel une mémoire et un processeur du dispositif de contrôle sont intégrés à un système sur puce.

12. Système selon la revendication 1, dans lequel la demande de contrôle (ReqC) contient une demande de jeton d'accès (ReqAT) au dispositif de contrôle (CD).

13. Système selon la revendication 12, dans lequel la demande de jeton d'accès (ReqAT) et la demande de contrôle (ReqC) sont considérées comme la même demande.

14. Système selon la revendication 12 ou 13, dans lequel le système comprenant en outre
un moyen pour recevoir par le serveur d'authentification (AS) la demande de jeton d'accès (ReqAT),
un moyen pour déchiffrer la demande de jeton d'accès (ReqAT) avec sa clé privée, ou
si la demande de jeton d'accès (ReqAT) a été signée précédemment,
un moyen pour récupérer par le serveur d'authentification (AS) la clé publique du dispositif de contrôle (CD) associée à l'identifiant (IdND) du dispositif réseau (ND), et
un moyen pour accepter ou décliner la demande.

15. Système selon la revendication 8 précédente, dans lequel les paramètres comprennent l'identifiant (IdU) du dispositif utilisateur (UD), l'identifiant de dispositif réseau (IdND), et l'identifiant temporaire (IdS).
